# EUROPEAN PATENT APPLICATION

(11) **EP 4 481 431 A1**
(43) Date of publication of application: **25.12.2024**
(21) Application number: 23180557.3
(22) Date of filing: 21.06.2023
(51) Int. Cl.: G01S 7/41, G01S 13/42, G01S 13/58, G01S 13/931

(54) **METHODS AND SYSTEMS FOR DETERMINING A BEAM VECTOR LIST FOR OBJECT DETECTION**

(71) Applicant: Aptiv Technologies AG, 8200 Schaffhausen (CH)
(72) Inventor: Labusch, Sven, 50737 Köln (DE); Becker, Adrian, 40627 Düsseldorf (DE); Grumpe, Arne, 45276 Essen (DE)
(74) Representative: Manitz Finsterwald Patent- und Rechtsanwaltspartnerschaft mbB

(57) **Abstract**

A computer implemented method for determining a beam vector list for object detection may include the following steps carried out by computer hardware components: receiving radar data from at least one radar sensor; determining range information and velocity information based on the radar data; and determining at least one beam vector list based on the range information and the velocity information using a neural network.

## Description

### FIELD

The present disclosure relates to methods and systems for determining a beam vector list for object detection.

### BACKGROUND

Various sensors, such as cameras, radar sensors or LIDAR sensors, may be used in automotive applications to monitor the environment of a vehicle. Driver assistant systems may make use of data captured from the sensors, for example by analyzing the data to detect objects. Object detection may be based on a strength of a signal that is received with a sensor. However, the received signal may be difficult to distinguish from noise, which may also be captured by the sensor. Thus, reliable object detection may be a cumbersome task.

Accordingly, there is a need to provide methods and systems for object detection that efficiently lead to accurate results.

### SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for determining a beam vector list for object detection, wherein the method comprises the following steps carried out by computer hardware components: receiving radar data from at least one radar sensor; determining range information and velocity information based on the radar data; and determining at least one beam vector list based on the range information and the velocity information using a neural network.

In other words, the computer implemented method described herein may determine a sub-selection of beam vectors or beamforming vectors of a radar sensor which may be important for a specific task. The specific task may be, for example, an object detection, for example of vulnerable road users (VRU) like cyclists or pedestrians. It is understood, that the systems and methods described herein may also be used for other tasks. The sub-selection of beam vectors may be described by a beam vector list. The beam vector list may comprise an ordered or unordered list, wherein each entry of the beam vector list may correspond to a beam vector of the radar sensor. The beam vector list may be determined based on radar data received by a radar sensor. The radar data may comprise raw radar data, for example, analog-to-digital converter (ADC) data. The radar sensor may be mounted on a vehicle and configured to transmit and receive radar data. In particular, the radar sensor may comprise a plurality of antennas, wherein each of the plurality of antennas may be configured to transmit and receive radar data. The transmitted radar data may comprise electromagnetic waves transmitted by the radar sensor. The received radar data may comprise a part of the transmitted electromagnetic waves that is reflected from an object in a vicinity of the vehicle.

The computer implemented method may determine range information of an object in an environment of the vehicle based on the radar data of the radar sensor. The range information may describe a distance between the object and the vehicle. The range information may be determined using a Fast Fourier Transformation (FFT) method. Further, the computer-implemented method may determine velocity information of the object in the environment of the vehicle based on the radar data of the radar sensor. The velocity information may be a radial velocity information or a Doppler information of the object.

A neural network may be used to determine the beam vector list based on the range information of the object in the environment of the vehicle and the velocity information of the object in the environment of the vehicle. The neural network may be a trained neural network. For example, the neural network may be trained with a plurality of appropriate training data. In other words, the training data may be input data to the neural network and output data of the neural network may be compared to ground-truth data, and then weights of the neural network may be adapted so that the output data is close to the ground-truth data. The neural network may be a convolutional neural network (CNN) or a recurrent neural network (RNN). It is understood that also other kinds of neural networks may be used to determine the at least one beam vector list based on the range information and the velocity information of the radar sensor.

According to an embodiment, the method may further comprise the following steps carried out by computer hardware components: determining a signal strength of the radar data based on the range information and the velocity information; transmitting the signal strength as input to the neural network; and determining the at least one beam vector list based on the range information, the velocity information and the signal strength of the radar data using the neural network. The signal strength (for example: a norm) of the radar data may be a signal strength of the received radar data. In particular, the signal strength may be a signal strength of reflected electromagnetic waves from an object in the vicinity of the vehicle and received by the radar sensor. The signal strength may depend on a size of the object in the environment of the vehicle. Further, the signal strength may depend on a distance (or a range) between the object and the radar sensor.

According to an embodiment, the method may further comprise the following steps carried out by computer hardware components: determining at least one angle based on the range information and the velocity information; transmitting the at least one angle as input to the neural network; and determining the at least one beam vector list based on the range information, the velocity information and the at least one angle using the neural network. The at least one angle may comprise an estimation of an azimuth angle and/or an elevation angle. The azimuth angle and/or the elevation angle may describe an angle between the radar sensor and an object or target from that the radar sensor may receive the radar data.

According to an embodiment, the at least one angle may be determined using a Discrete Fourier Transformation (DFT) method.

According to an embodiment, the method may further comprise the following steps carried out by computer hardware components: determining at least one numerical value based on the range information and the velocity information; transmitting the at least one numerical value as input to the neural network; and determining the at least one beam vector list based on the range information, the velocity information and the at least one numerical value using the neural network. The at least one numerical value may comprise contextual information, for example, a mean value over a range region of a range-Doppler map and/or a mean value over a Doppler region of a range-Doppler map.

According to an embodiment, the at least one numerical value may be a mean of range regions and/or a mean of Doppler regions of a range-Doppler map. The range-Doppler map may comprise a two-dimensional matrix. One dimension may describe range information of received radar data of a radar sensor. The other dimension may describe Doppler information or velocity information of received radar data of a radar sensor. The range-Doppler map may be divided into a plurality of range-Doppler regions (in other words: range-Doppler cells). The plurality of range-Doppler regions may comprise a plurality of range regions and a plurality of Doppler regions (in other words: velocity regions). The range-Doppler map may be a dense map. The range-Doppler map may visualize received radar signals of objects in an environment of a vehicle.

According to an embodiment, a beam vector corresponding to an entry of the at least one beam vector list may comprise an azimuth angle and an elevation angle. Thus, additionally to a range information of an object in the environment of a vehicle and a velocity information of the object in the environment of the vehicle, also the azimuth angle and the elevation angle of the object may be known which may improve a localization of the object in relation to the radar sensor or the vehicle.

According to an embodiment, the method may further comprise the following steps carried out by computer hardware components: determining selection values based on an output of the neural network using a sigmoid function; and determining the at least one beam vector list based on the selection values. For each range-Doppler cell of the plurality of range-Doppler cells, a selection value may be determined. Each of the selection values of the plurality of selection values may comprise a value between zero and one. For example, the selection value may describe how important the respective range-Doppler cell may be for a specific task. A high selection value may mean that the respective range-Doppler cell is more important to the specific task than a range-Doppler cell with a low selection value.

According to an embodiment, the at least one beam vector list may correspond to a number of cells in a range-Doppler map. The number of cells, or the number of range-Doppler cells of the range-Doppler map may be an integer number. A number of entries of the at least one beam vector list may correspond to the number of range-Doppler cells in the range-Doppler map. For example, the at least one beam vector list may include 1, 2, 3, 4, or 5 entries. Thus, the number of entries of the at least one beam vector list is 1, 2, 3, 4, or 5. Therefore, the number of cells in the range-Doppler map is 1, 2, 3, 4, or 5, respectively. The number of cells corresponding to the number of entries in the at least one beam vector list may determine the most important cells in the range-Doppler map to the specific task. The specific task may be a detection of pedestrians, cyclists, or the like in an environment of the vehicle.

According to an embodiment, the number of cells may be a predefined fixed number of cells in the range-Doppler map or a dynamic number of cells in the range-Doppler map. Thus, it may be determined in advance how many cells in the range-Doppler map may be selected for further processing. For example, the predefined fixed number of cells in the range-Doppler map may be 1, 2, or 3. Thus, only 1, 2, or 3 cells in the range-Doppler map that may correspond to 1, 2, or 3 entries in the at least one beam vector list may be selected for further processing. Further processing may comprise object detection using another neural network. The number of cells may depend on the specific task. The number of cells corresponding to entries of the at least one beam vector list may be different for different specific tasks. For example, detecting a pedestrian in the environment of the vehicle may comprise a higher (or lower) number of cells than detecting a cyclist in the environment of the vehicle. Thus, a higher (or lower) number of entries of the at least one beam vector list may be selected for further processing. The number of cells may also be a dynamic number. For example, the number of cells may depend on a number of detected objects in the environment of the vehicle.

According to an embodiment, the neural network may be trained end-to-end. The neural network may be trained for a specific task using appropriate training data and respective ground-truth data. For example, the neural network may be trained to determine at least one beam vector list for pedestrian detection in an environment of a vehicle. The neural network may be a deep neural network (DNN) comprising a plurality of layers, wherein each layer may solve a part of the specific task, for example, extracting relevant features from input data of the neural network. The neural network may be trained end-to-end together with a further neural network, wherein, for example, the further neural network may be a neural network for object detection.

According to an embodiment, the method may further comprise the following step carried out by computer hardware components: transmitting the at least one beam vector list to another neural network. The other neural network may be used for further processing the at least one beam vector list. In particular for further processing entries of the at least one beam vector list or corresponding beam vectors. The other neural network may be used for object detection based on the at least one beam vector list. It is understood that the task of determining at least one beam vector list and object detection may be performed using one neural network, wherein the one neural network may comprise the neural network and the other neural network. The neural network and the other neural network may be trained end-to-end.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system described herein and the at least one radar sensor. The vehicle can be a car or truck and the sensor may be mounted on the vehicle. The sensor may be directed to an area in front or in the rear or at a side of the vehicle.

In another aspect, the present disclosure is directed at a non-transitory computer readable medium comprising instructions which, when executed by a computer, cause the computer to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

It is understood that features described in connection with the methods can be realized in the computer system as well as the non-transitory computer readable medium and vice versa.

### DRAWINGS

Exemplary embodiments and functions of the present disclosure are described herein in conjunction with the following drawings, showing schematically:
- Fig. 1: a scheme according to an embodiment;
- Fig. 2: a further scheme according to an embodiment;
- Fig. 3: a flow diagram illustrating a method for determining a beam vector list for object detection according to various embodiments; and
- Fig. 4: a computer system with a plurality of computer hardware components configured to carry out steps of a computer implemented method for determining a beam vector list for object detection to various embodiments.

### DETAILED DESCRIPTION

In automotive applications using a radar sensor, the signal processing usually may start with analog-to-digital converter (ADC) data. The radar sensor may include a plurality of antenna. The ADC data may be three dimensional. The ADC data may be raw radar data. An analog-to-digital converter may change an analog signal that is continuous in terms of both time and amplitude to a digital signal that is discrete in terms of both time and amplitude to determine the ADC data. The analog-to-digital converter data may be transformed along a fast-time, for example, a time index within a chirp, and a slow-time, for example, a time index across a chirp. There may be data points for each antenna of the radar sensor, each chirp (slow-time) and multiple sampling points within each chirp (fast-time). A chirp may be a radar signal in which a frequency of the radar signal increases or decreases with time.

By running a Fast Fourier Transformation (FFT) method on the fast-time dimension of the chirp, range information may be retrieved from the ADC data. A radial velocity information or "Doppler" information may be determined by running afterwards a FFT on the slow-time dimension of the chirp. In addition, a direction-of-arrival module may be used along the antenna dimension to determine azimuth and/or elevation angles of detections based on the ADC data.

The first two steps, running a respective FFT method on the fast-time dimension of the chirp and running a respective FFT on the slow-time dimension of the chirp, may be performed (in other words: carried out) with relatively little computational effort. The last step of determining at least one of an azimuth angle or an elevation angle of a detection may require more computational costs than the first two steps. Thus, this last step may be expensive, expansive, dynamic and/or sophisticated.

To reduce computational costs for determining an azimuth angle or an elevation angle of a detection, a thresholding algorithm may be used on the output of the first two steps. In other words, a thresholding algorithm may be performed on the range information and the radial velocity information, that may be determined using a respective FFT on a chirp. The thresholding algorithm may be, for example, a constant-false-alarm-rate (CFAR) algorithm. Thus, using a CFAR algorithm, a direction-of-arrival algorithm of the direction-of-arrival module may only be performed to a selection of range-Doppler cells of a range-Doppler map and not to all range-Doppler cells of the range-Doppler map. The selection of range-Doppler cells may be determined using the CFAR algorithm.

The range-Doppler map may represent signal strengths of signals received from the radar sensor in a coordinate system with an axis of ordinates showing the range information and an axis of abscissae showing the Doppler information (or radial velocity information) of a possible detection. The range-Doppler map may include a plurality of range-Doppler cells. This means the two-dimensional range-Doppler map may contain a signal strength of each range-Doppler cell.

Classical CFAR algorithms may be performed on range-Doppler maps where the antenna dimension is compressed by a signal strength (wherein the signal strength may be based on a norm or may be a norm) or an approximation of it. The CFAR algorithm may be used to find a local threshold which separates noise from the signals of detections (in other words: targets).

However, for object detection, especially for detecting vulnerable road users (VRU), a pure signal strength-based threshold may be suboptimal. It may not be guaranteed that the object of interest, for example a pedestrian, has a higher signal strength than a potentially non-interesting object, for example a pole or a curb. A weak reflector like a pedestrian in a local environment may be represented with a signal strength in the range-Doppler map, that is below the threshold of the CFAR algorithm and therefore the information of the weak reflector may be lost.

Neural networks may be used in the field of radar signal processing and high-level tasks like object detection or semantic segmentation. However, a neural network (deep learning or machine learning) may also be used for a thresholding task. In particular, a neural network may be used as a thresholding algorithm or filtering algorithm to determine a beam vector list or a sub-selection of a beam vector list.

A range-Doppler-antenna cube including range information and Doppler information may be provided to the neural network as an input. The neural network may output a beam vector list (in other words: a list of beam vectors) as will be described in more detail further below. The usage of neural networks may enable the algorithm to adapt in an end-to-end trained manner to an optimization goal of a follow up neural network for high level tasks like object detection or semantic segmentation. Therefore, the methods described herein may be optimized for different goals, for example, to determine a beam vector list based on radar data for pedestrian detection, pole detection, or both, pedestrian detection and pole detection, etc.

Classical algorithms may only take information within one range into account, for example, a CFAR thresholding algorithm may purely be based on Doppler cells in a neighborhood in the Doppler map. Also, classical CFAR algorithms may mainly be based on the norm along the antenna dimension, for example, the signal strength in one range-Doppler cell.

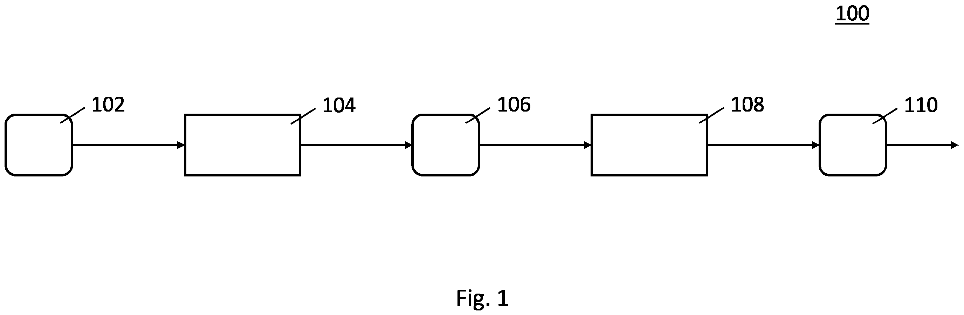

Fig. 1 shows a scheme 100 according to an embodiment. Radar data 102 may be received from at least one radar sensor. The at least one radar sensor may include at least one antenna configured to transmit and receive radar signals. The radar data 100 may include analog-to-digital converter (ADC) data. The ADC data or the radar data 100 may include a fast-time dimension of a chirp and a slow-time dimension of a chirp for each antenna of the radar sensor, wherein a chirp may be a radar signal of an antenna of the at least one radar sensor in which a frequency of the radar signal increases or decreases with time.

A Fast Fourier Transformation (FFT) method 104 (which may also be referred to as range and Doppler FFT) may be performed on the fast-time dimension of the chirp to determine range information of a target or a detection in a field-of-view of the at least one radar sensor. Also, a Fast Fourier Transformation method 104 may be performed on the slow-time dimension of the chirp to determine radial velocity information (in other words: Doppler information) of the target or the detection in the field-of-view of the at least one radar sensor.

The range information and the radial velocity information may be represented in a range-Doppler map 106 (which may also be referred to as range-Doppler-antenna cube) for each antenna of the at least one radar sensor. The range-Doppler map 106 including the range information and the radial velocity information for each antenna of the radar sensor may be provided as input to a neural network based subselection module 108. The neural network based subselection module 108 may include an end-to-end trained neural network, for example a neural network 214 like will be described in more detail below. Further, the neural network based subselection module 108 may determine at least one beam vector list 110 based on the range information and the radial velocity information determined by a respective FFT applied to the radar data 102 of each antenna of the at least one radar sensor. The at least one beam vector list 110 may include a number of beam vectors that may be used for further processing, for example for object detection using another neural network.

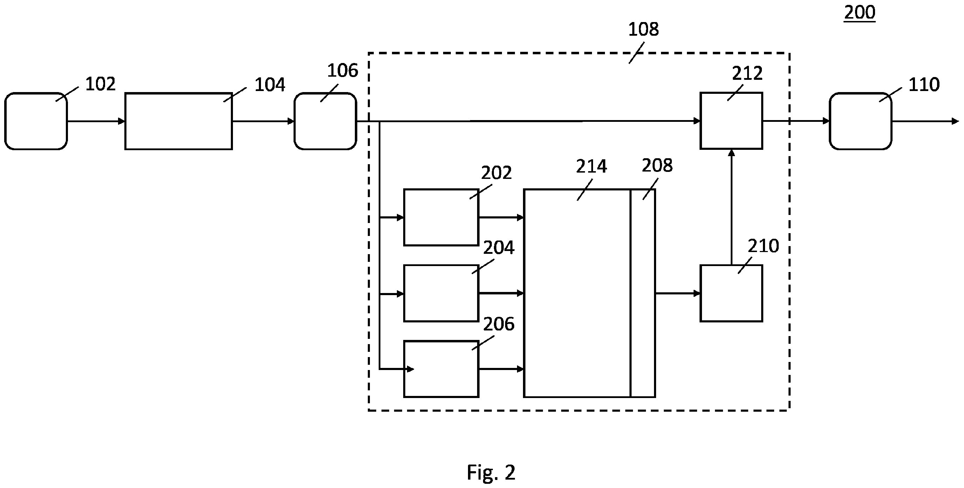

Fig. 2 shows a further scheme 200 according to an embodiment. The radar data 102, the Fast Fourier Transformation method 104, the range-Doppler map 106, the neural network based subselection module 108 and the beam vector list 110 as described in Fig. 1 may also be used in this embodiment. In this embodiment, at least one of multiple input data (in other words: input features) may be used as input to a neural network 214 provided in the neural network based subselection module 108. The neural network 214 may be a convolutional neural network (CNN) on range-Doppler dimension. It is understood, that also other architectures of the neural network 214 may be possible.

The neural network based subselection module 108 may determine a signal strength 202 of the radar data 102 or signal strength data based on the information of the range-Doppler map 106. In particular, a signal strength 202 of a radar signal (or a chirp) received by the at least one radar sensor may be determined based on the range information and the velocity information. The signal strength 202 may be transmitted as input to the neural network 214. The neural network based subselection module 108 may determine at least one beam vector list 110 based on the range information, the velocity information and the signal strength 202 of the radar data 102.

According to another embodiment, at least one angle 204 may be determined based on the information of the range-Doppler map 106. The at least one angle 204 may be an estimation of an azimuth angle and/or an estimation of an elevation angle of a possible detection of an object in the field-of-view of the at least one radar sensor. In particular, an estimation of the angle 204 may be determined based on the range information and the velocity information. A Discrete Fourier Transformation (DFT) method may be used to determine the angle 204 or an estimation of the angle 204. In particular, a DFT method with a number of output bins that may roughly be equal the number of antennas of the at least one radar sensor may be used to determine the angle 204 or rough angular information (in other words: an estimation of the angle 204).

The at least one angle 204 may be transmitted as input to the neural network 214. The neural network based subselection module 108 may determine at least one beam vector list 110 based on the range information, the velocity information and the at least one angle 204. In another embodiment, the neural network based subselection module 108 may determine at least one beam vector list 110 based on the range information, the velocity information, the signal strength 202 of the radar data 102 and the at least one angle 204.

According to another embodiment, at least one numerical value 206 may be determined based on the information of the range-Doppler map 106. The at least one numerical value 206 may be a mean of range regions (in other words: a mean of range cells) in the range-Doppler map 106 and/or a mean of Doppler regions (or radial velocity cells) of the range-Doppler map 106. In particular, the at least one numerical value 206 may be determined based on the range information and the velocity information. The at least one numerical value 206 may be transmitted as input to the neural network 214. The neural network based subselection module 108 may determine at least one beam vector list 110 based on the range information, the velocity information and the at least one numerical value 206. In another embodiment, the neural network based subselection module 108 may determine at least one beam vector list 110 based on the range information, the velocity information, the signal strength 202 of the radar data 102, the at least one angle 204 and the at least one numerical value 206.

According to an embodiment, a sigmoid function (in other words: a sigmoid activation) may be used to determine selection values 208 based on an output of the neural network 214. The selection values 208 may be values between zero and one for each range-Doppler cell of the range-Doppler map 106. At least one beam vector list 110 may be determined based on the selection values 208. For example, a selection module 210 may select a dynamic number or a fixed number of cells in the range-Doppler map 106 based on the selection values 208 to determine the at least one beam vector list 110. Thus, the at least one beam vector list 110 may correspond to a number of cells in the range-Doppler map 106. Therefore, the at least one beam vector list 110 may include only a part or parts of the range-Doppler map 106. The selection of a number of cells in the range-Doppler map 106 may be realized using thresholds, for example, the number of cells may be a number of the "K" highest values in the range-Doppler map 106. It is understood, that also more sophisticated selection methods may be used select a number of cells in the range-Doppler map 106. For example, the neural network based subselection module 108 may be used to select the number of cells in the range-Doppler map 106.

According to an embodiment, the at least one beam vector list 110 may be determined based on the output of the selection module 210, for example the selected dynamic number or the fixed number of cells in the range-Doppler map 106, and the information of the range-Doppler map 106 (range information and radial velocity information for each antenna of the at least one radar sensor) using a combination module 212. The combination module 212 may select information of range-Doppler cells in the range-Doppler map 106 based on the output of the selection module 210. For example, the combination module 212 may select range-Doppler cells based on cell indices of the range-Doppler cells that correspond to a dynamic number or a fixed number of cells as describe by the output of the selection module 210. The selected range-Doppler cells may be a sub-selection of range-Doppler cells or beam vectors that may indicate an object in the environment of the vehicle. The at least one beam vector list 110 may include the sub-selection.

The corresponding beam vectors to the at least one beam vector list 110 may be forwarded or transmitted to another neural network for further processing. For example, the other neural network may be used for objection detection based on the at least one beam vector list 110. The neural network 214 and the other neural network (not shown in Fig. 2) may be trained end-to-end, for example by providing training data including input data similar to radar data 102 (ADC data) and ground truth data corresponding to a desired output of the further neural network when providing the ADC data as an input, and training the neural network 214 and the further neural network simultaneously.

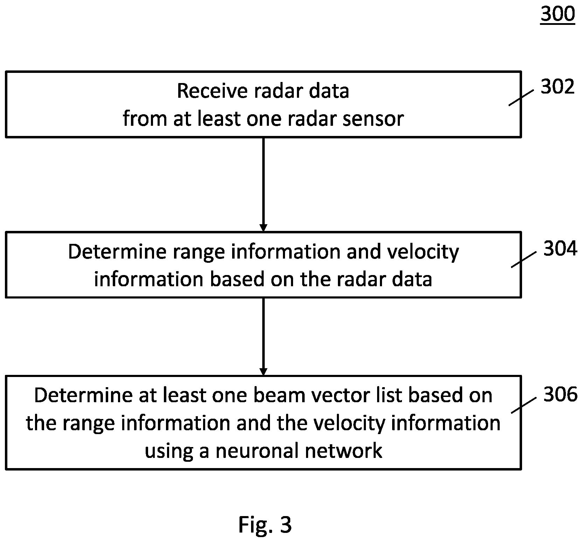

Fig. 3 shows a flow diagram 300 illustrating a method for determining a beam vector list for object detection according to various embodiments. At 302, radar data may be received from at least one radar sensor. At 304, range information and velocity information may be determined based on the radar data. At 306, at least one beam vector list may be determined based on the range information and the velocity information using a neural network.

According to an embodiment, the method may further include the following steps carried out by computer hardware components: determining a signal strength of the radar data based on the range information and the velocity information; transmitting the signal strength as input to the neural network; and determining the at least one beam vector list based on the range information, the velocity information and the signal strength of the radar data using the neural network.

According to an embodiment, the method may further include the following steps carried out by computer hardware components: determining at least one angle based on the range information and the velocity information; transmitting the at least one angle as input to the neural network; and determining the at least one beam vector list based on the range information, the velocity information and the at least one angle using the neural network.

According to an embodiment, the at least one angle may be determined using a Discrete Fourier Transformation (DFT) method.

According to an embodiment, the method may further include the following steps carried out by computer hardware components: determining at least one numerical value based on the range information and the velocity information; transmitting the at least one numerical value as input to the neural network; and determining the at least one beam vector list based on the range information, the velocity information and the at least one numerical value using the neural network.

According to an embodiment, the at least one numerical value may be a mean of range regions and/or a mean of Doppler regions of a range-Doppler map.

According to an embodiment, a beam vector corresponding to an entry of the at least one beam vector list may include an azimuth angle and an elevation angle.

According to an embodiment, the method may further include the following steps carried out by computer hardware components: determining selection values based on an output of the neural network using a sigmoid function; and determining the at least one beam vector list based on the selection values.

According to an embodiment, the at least one beam vector list may correspond to a number of cells in a range-Doppler map.

According to an embodiment, the number of cells may be a predefined fixed number of cells in the range-Doppler map or a dynamic number of cells in the range-Doppler map.

According to an embodiment, the neural network may be trained end-to-end.

According to an embodiment, the method may further include the following step carried out by computer hardware components: transmitting the at least one beam vector list to another neural network.

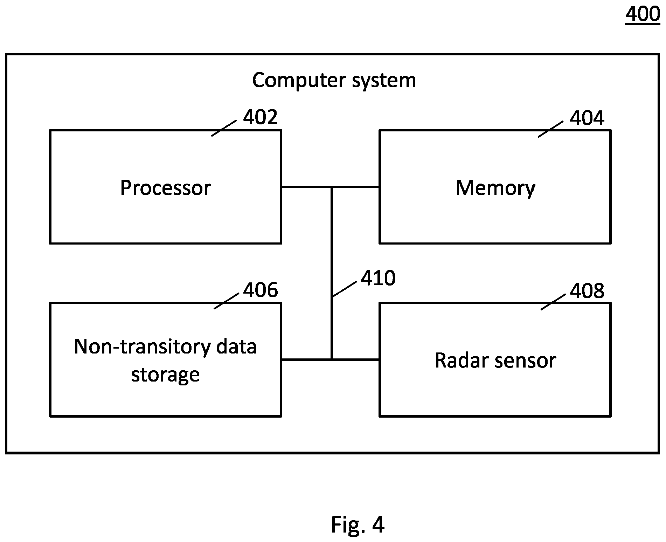

Each of the steps 302, 304, 306, and the further steps described above may be performed by computer hardware components, for example as described with reference to Fig. 4.

Fig. 4 shows a computer system 400 with a plurality of computer hardware components configured to carry out steps of a computer implemented method for determining a beam vector list for object detection according to various embodiments. The computer system 400 may include a processor 402, a memory 404, and a non-transitory data storage 406. A radar sensor 408 may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The radar sensor 408 may be used to determine radar data, for example radar data that is provided to the methods as described herein.

The processor 402, the memory 404, and the non-transitory data storage 406 may be coupled with each other, e.g. via an electrical connection 410, such as e.g. a cable or a computer bus or via any other suitable electrical connection to exchange electrical signals. The radar sensor 408 may be coupled to the computer system 400, for example via an external interface, or may be provided as part of the computer system (in other words: internal to the computer system 400, for example coupled via the electrical connection 410).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

The methods described herein may be directed at learnable CFAR methods based on range-Doppler-antenna information and may present a solution for determining a beam vector list based on radar data that may overcome a fully dependency on the signal strength of the radar data that may be more adaptive to an enclosing or follow up algorithm for object detection or semantic segmentation for example.

In contrast to most classical algorithms that may only take information within one range into account, i.e. a thresholding algorithm like CFAR may purely be based on neighborhood in Doppler, the methods and systems described herein may use antenna information of a radar sensor and the neighborhood in range. The methods and systems described herein may also take advantage of signal strength (which may also be referred to as signature) in a spatial area, i.e. range and a (rough estimated) angle plus Doppler information. Thus, this combination of information may be more flexible to also detect targets which may not have the highest signal strength.

Summarized the methods and systems described herein may solve a problem of the classical CFAR method being non adaptive to further processing and fully dependent on the signal strength. The methods described herein may be trained end-to-end and may find signatures in the radar data to select the best beam vectors for an enclosing optimization target like, for example, detecting objects of a specific kind. For that, the methods described herein may also take information from different antennas respectively, rough angular information as well as neighboring range cells into account. Therefore, the methods and systems describe herein may not be bound to the signal strength per range-Doppler cell.

### Reference numeral list

- 100: scheme
- 102: radar data
- 104: Fast Fourier Transformation (FFT) method
- 106: range-Doppler map
- 108: neural network based subselection module
- 110: beam vector list

- 200: scheme
- 202: signal strength
- 204: angle
- 206: numerical value
- 208: selection value
- 210: selection module
- 212: combination module
- 214: neural network

- 300: flow diagram illustrating a method for determining at least one beam vector list for object detection
- 302: step of receiving radar data from at least one radar sensor
- 304: step of determining range information and velocity information based on the radar data
- 306: step of determining at least one beam vector list based on the range information and the velocity information using a neural network

- 400: computer system according to various embodiments
- 402: processor
- 404: memory
- 406: non-transitory data storage
- 408: radar sensor
- 410: connection

## Claims

1. Computer implemented method for determining a beam vector list (110) for object detection,
the method comprising the following steps carried out by computer hardware components:
- receiving (302) radar data (102) from at least one radar sensor;
- determining (304) range information and velocity information based on the radar data (102); and
- determining (306) at least one beam vector list (110) based on the range information and the velocity information using a neural network (214).

2. The method of claim 1, further comprising the following steps carried out by computer hardware components:
- determining a signal strength (202) of the radar data (102) based on the range information and the velocity information;
- transmitting the signal strength (202) as input to the neural network (214); and
- determining the at least one beam vector list (110) based on the range information, the velocity information and the signal strength (202) of the radar data (102) using the neural network (214).

3. The method of at least one of claims 1 or 2, further comprising the following steps carried out by computer hardware components:
- determining at least one angle (204) based on the range information and the velocity information;
- transmitting the at least one angle (204) as input to the neural network (214); and
- determining the at least one beam vector list (110) based on the range information, the velocity information and the at least one angle (204) using the neural network (214).

4. The method of claim 3,
wherein the at least one angle (204) is determined using a Discrete Fourier Transformation, DFT, method.

5. The method of at least one of claims 1 to 4, further comprising the following steps carried out by computer hardware components:
- determining at least one numerical value (206) based on the range information and the velocity information;
- transmitting the at least one numerical value (206) as input to the neural network (214); and
- determining the at least one beam vector list (110) based on the range information, the velocity information and the at least one numerical value (206) using the neural network (214).

6. The method of claim 5,
wherein the at least one numerical value (206) is a mean of range regions and/or a mean of Doppler regions of a range-Doppler map (106).

7. The method of at least one of claims 1 to 6,
wherein a beam vector corresponding to an entry of the at least one beam vector list (110) comprises an azimuth angle and an elevation angle.

8. The method of at least one of claims 1 to 7, further comprising the following steps carried out by computer hardware components:
- determining selection values (208) based on an output of the neural network (214) using a sigmoid function; and
- determining the at least one beam vector list (110) based on the selection values (208).

9. The method of at least one of claims 1 to 8,
wherein the at least one beam vector list (110) corresponds to a number of cells in a range-Doppler map (106).

10. The method of claim 9,
wherein the number of cells is a predefined fixed number of cells in the range-Doppler map (106) or a dynamic number of cells in the range-Doppler map (106).

11. The method of at least one of claims 1 to 10,
wherein the neural network (214) is trained end-to-end.

12. The method of at least one of claims 1 to 11, further comprising the following step carried out by computer hardware components:
- transmitting the at least one beam vector list (110) to another neural network.

13. Computer system, the computer system (400) comprising a plurality of computer hardware components configured to carry out steps of the computer implemented method of at least one of claims 1 to 12.

14. Vehicle, comprising the computer system (400) of claim 13 and the at least one radar sensor.

15. Non-transitory computer readable medium comprising instructions which, when executed by a computer, cause the computer to carry out the computer implemented method of at least one of claims 1 to 12.
